# EUROPEAN PATENT APPLICATION

(11) **EP 3 755 056 A1**
(43) Date of publication of application: **23.12.2020**
(21) Application number: 19784416.0
(22) Date of filing: 09.04.2019
(51) Int. Cl.: H04W 36/22, H04W 36/26

(54) **COMMUNICATION METHOD, DEVICE AND SYSTEM, AND STORAGE MEDIUM**

(30) Priority: 13.04.2018 CN 201810333103
(71) Applicant: HUAWEI TECHNOLOGIES CO., LTD., Shenzhen, Guangdong 518129 (CN)
(72) Inventor: LIANG, Jinyao, Shenzhen, Guangdong 518129 (CN); WANG, Rui, Shenzhen, Guangdong 518129 (CN); ZENG, Qinghai, Shenzhen, Guangdong 518129 (CN); ZHANG, Hongping, Shenzhen, Guangdong 518129 (CN); DAI, Mingzeng, Shenzhen, Guangdong 518129 (CN); ZHAO, Yang, Shenzhen, Guangdong 518129 (CN)
(74) Representative: Pfenning, Meinig & Partner mbB
(86) International application number: PCT/CN2019/081903
(87) International publication number: WO 2019/196833

(57) **Abstract**

This application relates to the field of wireless communications technologies, and in particular, to a handover process in a wireless communications system. This specification describes a communications method and apparatus, a system, and a storage medium, to provide a method to support handover of user equipment between network side devices or networks with different bearer support capabilities. The method includes: sending a first message, where the first message includes information of N bearers to be handed over, and when N is greater than M, a first information element in the first message includes information of M bearers in the N bearers, and a second information element in the first message includes information of N-M bearers other than the M bearers in the N bearers, where M is a maximum quantity of bearers supported by the first information element, and the second information element is an information element unidentifiable by a target network element of the handover.

## Description

### TECHNICAL FIELD

This application relates to the field of wireless communications technologies, and in particular, to a handover process in a wireless communications system.

### BACKGROUND

With continuous upgrade of network functions and enrichment of service types, a quantity of bearers provided by a communications network for user equipment needs to be increased, to support the user equipment in transmitting different service data simultaneously. However, network side devices need to be gradually upgraded in order to support the increased quantity of bearers on the whole network. In this upgrade process, some network side devices may support a larger quantity of bearers, while some network side devices may support only a hybrid networking scenario in which there is a smaller quantity of bearers. In this case, the user equipment may need to be handed over between network side devices with different support capabilities. How to support this type of handover is an urgent problem to be resolved in a network evolution process.

### SUMMARY

This specification describes a communications method and apparatus, a system, and a storage medium, to provide a method to support handover of user equipment between network side devices or networks with different bearer support capabili ti es.

According to one aspect, this application provides a communication method. The method includes: sending a first message where the first message includes information of N bearers to be handed over, and N is less than or equal to a maximum quantity of bearers supported by a source network element to be handed over. When N is greater than M, a first information element in the first message includes information of M bearers in the N bearers, and a second information element in the first message includes information of N-M bearers other than the M bearers in the N bearers, where M is a maximum quantity of bearers supported by the first information element, and the second information element is an information element unidentifiable by a target network element of the handover.

In a possible design, a priority of any one of the M bearers is higher than or equal to a priority of any one of the N-M bearers.

In a possible design, the method further includes: receiving priority information of the N bearers.

In a possible design, M is a maximum quantity of bearers supported by the target network element of the handover.

In a possible design, the sending a first message includes: sending the first message to the target network element of the handover; or sending the first message to a control network element of the target network element of the handover; or sending the first message to a control network element of the source network element.

In a possible design, the method further includes: the first information element includes the information of the N bearers when N is less than or equal to M.

In a possible design, the sending a first message includes sending the first message to the target network element of the handover, and the second information element is used to trigger the target network element to perform full configuration on at least one of the N bearers.

According to another aspect, an embodiment of this application provides a communication method. The method includes: receiving a first message sent by a source network element, where the first message includes information of N bearers to be handed over, N is less than or equal to a maximum quantity of bearers supported by the source network element, a first information element in the first message includes information of M bearers in the N bearers, and a second information element in the first message includes information of N-M bearers other than the M bearers in the N bearers, where M is a maximum quantity of bearers supported by the first information element, and the second information element is an information element unidentifiable by a target network element of the handover; releasing the N-M bearers; and sending the information of the N bearers to the target network element of the handover.

In a possible design, M is a maximum quantity of bearers supported by the target network element.

According to still another aspect, an embodiment of this application provides a communication method. The method includes: receiving a first message sent by a source network element, where the first message includes information of N bearers to be handed over, N is less than or equal to a maximum quantity of bearers supported by the source network element, a first information element in the first message includes information of M bearers of the N bearers, and a second information element in the first message includes information of N-M bearers other than the M bearers in the N bearers, where M is a maximum quantity of bearers supported by the first information element, and the second information element is an information element unidentifiable by the target network element of the handover; determining, based on the information of the N bearers, a bearer admitted being handed over and a bearer not admitted being handed over; and sending, to the source network element, information of the bearer admitted being handed over and the bearer not admitted being handed over.

In a possible design, the method further includes: performing, based on the first message, full configuration on the bearer admitted being handed over; and sending to the source network element, configuration information of the bearer admitted being handed over.

According to still another aspect, an embodiment of this application provides a communication method. The method includes: receiving a bearer remapping indication, where the bearer remapping indication is used to indicate a terminal device to perform bearer remapping on a traffic flow without a bearer; and mapping, based on the bearer remapping indication, the traffic flow without a bearer to a valid bearer.

In a possible design, the method further includes: receiving rule information of bearer remapping; and the mapping the traffic flow without a bearer to a valid bearer includes mapping the traffic flow without a bearer to the valid bearer based on the bearer remapping rule.

According to still another aspect, an embodiment of this application provides an apparatus. The apparatus has a function of implementing the method in any one of the foregoing aspects or the possible designs thereof. The function may be implemented by hardware, or may be implemented by hardware by executing corresponding software. The hardware or the software includes one or more modules corresponding to the foregoing function. In a possible design, a structure of the apparatus includes a processor coupled to a memory, and the processor is configured to enable the apparatus to perform a corresponding function in the foregoing methods. The memory stores a program instruction and data that are necessary for the apparatus. Optionally, the apparatus may further include the memory.

According to still another aspect, an embodiment of this application provides a computer-readable storage medium. The computer-readable storage medium stores an instruction. When the instruction is run on a computer, the computer is enabled to perform the methods in the foregoing aspects.

According to still another aspect, an embodiment of this application provides a computer program product including an instruction. When the computer program product is run on a computer, the computer is enabled to perform the methods in the foregoing aspects.

According to still another aspect, this application provides a chip system. The chip system includes a processor, configured to support the foregoing apparatus in implementing functions in the foregoing aspects, for example, generating or processing the information in the foregoing methods. In a possible design, the chip system further includes a memory, and the memory is configured to store a program instruction and data that are necessary for performing the function. The chip system may include a chip, or may include a chip and another discrete component.

### BRIEF DESCRIPTION OF DRAWINGS

The following describes more details of the embodiments of this application with reference to the accompanying drawings.
FIG. 1 is a schematic diagram of a possible application scenario according to an embodiment of this application;
FIG. 2 is a schematic diagram of another possible application scenario according to an embodiment of this application;
FIG. 3a to FIG. 3c are schematic diagrams of three possible handover procedures according to an embodiment of this application;
FIG. 4 is a schematic flowchart of a communication method according to an embodiment of this application;
FIG. 5 is a schematic structural diagram of an access network device according to an embodiment of this application;
FIG. 6 is a schematic structural diagram of a core network device according to an embodiment of this application; and
FIG. 7 is a schematic structural diagram of an apparatus according to an embodiment of this application.

### DESCRIPTION OF EMBODIMENTS

The following describes the technical solutions in the embodiments of this application with reference to the accompanying drawings in the embodiments of this application.

Network architecture and a service scenario described in the embodiments of this application are intended to describe the technical solutions in the embodiments of this application more clearly, and do not constitute a limitation on the technical solutions provided in the embodiments of this application. A person of ordinary skill in the art may know that with the evolution of the network architecture and the emergence of new service scenarios, the technical solutions provided in the embodiments of this application are also applicable to similar technical problems.

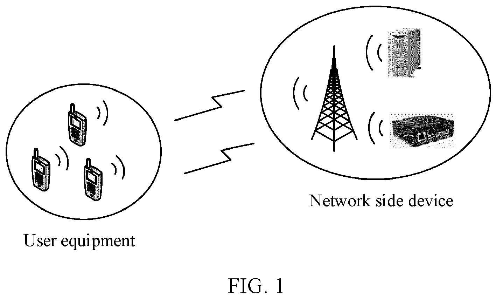

A technology described in this application may be applicable to an LTE system and a subsequently evolved system, for example, a new radio (new radio, NR) system, a fifth generation mobile communication (the 5th Generation mobile communication, 5G) system, or another wireless communications system that uses an orthogonal frequency division multiplexing (orthogonal frequency division multiplexing, OFDM) access technology, and is particularly applicable to a communications system in which handover, especially handover between network elements with different bearer support capabilities, is performed. FIG. 1 is a schematic diagram of a possible application scenario according to an embodiment of this application. User equipment (user equipment, UE) accesses a network side device through a wireless interface for communication, or may perform communication, for example, communication in a device-to-device (device to device, D2D) scenario or a machine-to-machine (machine to machine, M2M) scenario, with another user equipment. The network side device may communicate with the user equipment, or may communicate with another network side device. For example, a macro base station communicates with an access point, or an access network device communicates with a core network device. In this application, nouns "network" and "system" are usually interchangeably used, but a person skilled in the art can understand meanings of the nouns. A network side device may include an access network device and a core network device. The access network device is usually a device that communicates with user equipment through a radio air interface or provides wireless access for the user equipment. The core network device is usually a device that is configured to: provide a connection for user equipment, manage the user equipment, complete a service bearer, and provide a function of an interface between the user equipment and external networks.

User equipment in this application may be various hand-held devices, vehicle-mounted devices, wearable devices, computing devices, or control devices with a wireless communication function, or other processing devices connected to a wireless modem, and UE, mobile stations (mobile station, MS), terminals (terminal), terminal equipment (terminal equipment), or the like in various forms. For ease of description, in this application, all the devices mentioned above are collectively referred to as user equipment (UE).

The network side device in this application is a base station (base station, BS), a network controller, a mobile switching center, or the like. The base station is usually an apparatus that directly communicates with user equipment through a wireless channel, and the base station may be a macro base station, a micro base station, a relay station, an access point, a remote radio unit (remote radio unit, RRU), or the like in various forms. Certainly, another network side device that has a wireless communication function may perform wireless communication with the user equipment. This is not uniquely limited in this application. In different systems, a device with a base station function may have different names. For example, an evolved node B (evolved nodeB, eNB, or eNodeB) in an LTE network is referred to as a node B (node B) in a third generation (the 3rd Generation, 3G) network, and referred to as a gNB in a 5G system.

In this application, a base station may be the foregoing defined access network device; and a network controller, a mobile switching center, or the like may be the foregoing defined core network device. A device that is connected to the base station and that controls and manages a service or a connection of the base station, for example, a mobility management entity (mobility management entity, MME), an access and mobility management function (access and mobility management function, AMF) entity, or the like may also be the core network device defined in this application. These devices are defined as control devices of the base station in this application. In this application, "network elements" are also used to describe the foregoing devices. For example, a source network element in a handover process may be a source access network device such as a source base station in the handover process. For example, a target network element in the handover process may be a target access network device such as a target base station in the handover. For another example, a control network element of the source network element may be a core network device connected to the source network element, such as an MME, an AMF, a serving gateway (serving gateway, S-GW), a packet data network gateway (packet data network gateway, P-GW), a session management function (session management function, SMF), or a user plane function (user plane function, UPF). A control network element of the target network element may be a core network device connected to the target network element, such as an MME, an AMF, an S-GW, a P-GW, an SMP, or a UPF.

In this embodiment of this application, the source (source) base station or the source network element is a base station or a network element that provides a service for user equipment before handover. The target (target) base station or the target network element is a base station or a network element to which the user equipment needs to be handed over. In other words, through the handover process, the network side device that provides a service for the user equipment changes from the source base station (or the source network element) to the target base station (or the target network element).

The following explains some common concepts or definitions in the embodiments of this application. It should be noted that some English abbreviations, such as an LTE system, are used as examples in this specification for describing the embodiments of this application, which may vary with evolution of a network. For specific evolution, refer to descriptions in corresponding standards.

"Data" or "data packet" in this application usually refers to service data or a data packet that carries service data, but may also include content such as signaling and a message to be transmitted by a system, for example, a reference signal and an uplink/downlink control message.

A bearer (bearer) in this application includes a radio bearer (radio bearer, RB) set up between the user equipment and the base station. The radio bearer may include a data radio bearer (data radio bearer, DRB) and a signaling radio bearer (signaling radio bearer, SRB). The bearer in this application may alternatively be an evolved radio access bearer (evolved radio access bearer, E-RAB). The E-RAB is a user plane bearer, and is used to transmit a voice service, a data service, or a multimedia service between the user equipment and a core network (core network, CN). The bearer in this application may alternatively be an evolved packet system (evolved packet system, EPS) bearer, which is a bearer between the user equipment and a core network P-GW. The bearer in this application may alternatively be an S5/S8 bearer, and the S5/S8 bearer is a bearer set up on an S5/S8 interface. The bearer in this application may alternatively be another type of bearer between the user equipment and the core network, a bearer on an S1 interface, and the like. For example, the different types of bearers above may be in a one-to-one correspondence. For example, one DRB corresponds to one E-RAB and one EPS bearer. Quantities of bearers supportable by networks of different protocol versions or different standards may be different. For example, an LTE R14 network may support a maximum of eight bearers. This may include that the LTE R14 network may support a maximum of eight data radio bearers. An NR R15 network may support a maximum of 15 bearers. This may include that the NR R15 network may support a maximum of 15 bearers. Because quantities of data radio bearers that can be supported are different, quantities of all bearers (that is, a sum of the data radio bearers and signaling radio bearers) supportable by networks may be different. The different quantities of bearers described in this specification may refer to different quantities of data radio bearers, or may refer to different quantities of signaling radio bearers, or may refer to different total quantities of data radio bearers and signaling radio bearers. A valid bearer in this application is a bearer that is currently retained by the user equipment or that is being used or that can be used by the user equipment.

The traffic flow (traffic flow) described in this application is a description of uplink data initiated by the user equipment or downlink data sent by the network side device. The traffic flow is mapped to a bearer and transmitted over interfaces between network elements. In this application, the traffic flow without a bearer is a traffic flow that does not have a bearer to which the traffic flow can be mapped, due to handover, a bearer link break, or the like.

The term "and/or" in this application describes only an association relationship for describing associated objects and represents that three relationships may exist. For example, A and/or B may represent the following three cases: Only A exists, A and B coexist, and only B exists. In addition, the character "/" in this specification generally indicates an "or" relationship between the associated objects.

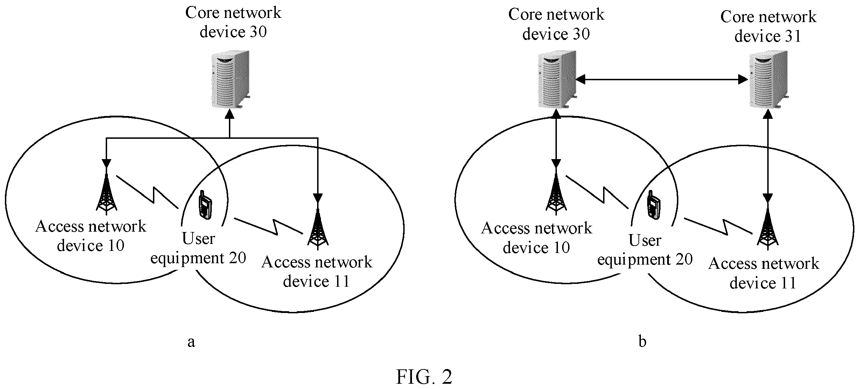

FIG. 2 is a schematic diagram of another possible application scenario according to an embodiment of this application. As shown in FIG. 2, user equipment 20 is located in a coverage overlapping area of an access network device 10 and an access network device 11. In this case, the user equipment 20 may need to be handed over between the access network device 10 and the access network device 11. The access network device 10 and the access network device 11 may directly exchange signaling through an X2 interface, to support completion of the handover, or may support completion of the handover through signaling exchange with a core network device. The X2 interface is an interface for communication between base stations. In FIG. 2a, the access network device 10 and the access network device 11 are connected to a same core network device 30. The core network device 30 controls and manages access and services of the access network device 10 and the access network device 11. In FIG. 2b, the access network device 10 is connected to a core network device 30 and the access network device 11 is connected to a core network device 31. The core network device 30 controls and manages access and a service of the access network device 10 and the core network device 31 controls and manages access and a service of the access network device 11.

The handover in this embodiment of this application may be handover between networks of different standards, or handover between networks of different protocol versions in a same standard. For example, the handover may be handover between an LTE network and a 5G network, or handover between network elements or networks that support different protocol versions in an LTE system, or handover between an LTE network and an LTE/5GC (an access network uses an LTE protocol, and a core network uses a 5G protocol) network, or handover between the LTE/5GC network and the 5G network, or the like.

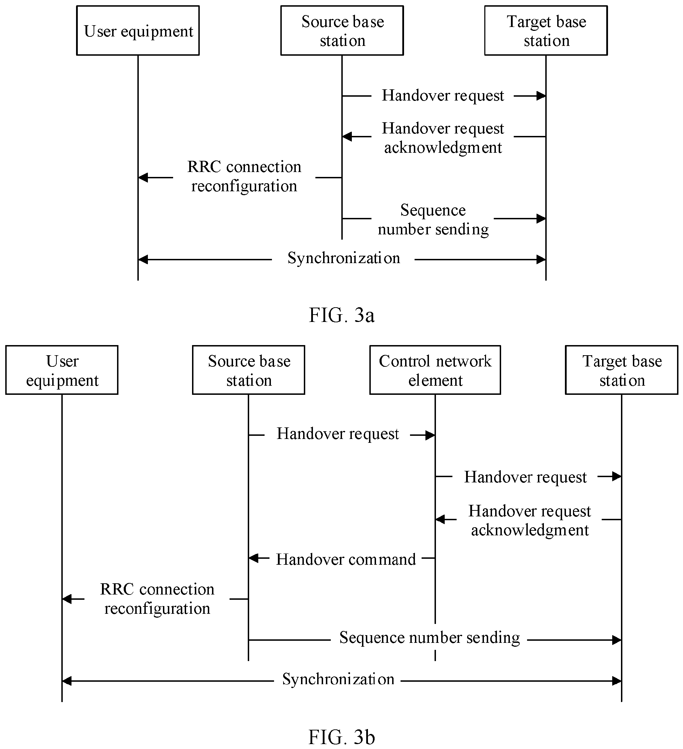

FIG. 3a is a schematic diagram of a handover procedure according to an embodiment of this application. In this handover process, a source base station directly exchanges signaling with a target base station through an X2 interface to support completion of the handover.

If the source base station determines that user equipment served by the source base station needs to be handed over, the source base station sends a handover request to the target base station. The handover request includes content such as information of a bearer to be handed over and configuration information of the user equipment. The configuration information includes configuration information of the foregoing bearer to be handed over, and may include configuration information of an air interface resource, and the like. The handover request may be handover request (HO request) signaling.

After receiving the handover request, the target base station returns a handover request acknowledgment to the source base station. The handover request acknowledgment may include information of a bearer admitted by the target base station, information of a bearer not admitted by the target base station, configuration information provided by the target base station for the user equipment, and the like. The configuration information may include configuration information provided by the target base station for an admitted bearer, and may include configuration information of an air interface resource, and the like. The handover request acknowledgment may be handover request acknowledge (HO request ACK) signaling.

The source base station sends a radio resource control (radio resource control, RRC) connection reconfiguration message to the user equipment based on the received information in the handover request acknowledgment. The message is used to reconfigure the user equipment based on the configuration information provided by the target base station. That is, the configuration information provided by the target base station is sent to the user equipment. The RRC connection reconfiguration message may be RRC connection reconfiguration signaling.

The source base station notifies the target base station of a sequence number (sequence number, SN) and a hyper frame number (hyper frame number, HFN) of a packet data convergence protocol (Packet Data Convergence Protocol, PDCP) used by a bearer between the user equipment and the source base station, so that the target base station implements synchronization with the user equipment. The PDCP SN and HFN information may be sent through SN status transfer signaling.

The user equipment performs synchronization with the target base station based on the received RRC connection reconfiguration message, and accesses the target base station, which includes processes in which the user equipment sends an uplink synchronization signal, and the target base station configures an uplink resource and a timing advance (timing advance, TA) for the user equipment.

When the foregoing processes are completed, the target base station further communicates with a control network element (not shown in FIG. 3a) of the target base station, for example, an MME, to update bearer information. The target base station further exchanges signaling (not shown in FIG. 3a) with the source base station, to release resources.

FIG. 3b is a schematic diagram of another handover procedure according to an embodiment of this application. In this handover process, a source base station and a target base station are connected to a same control network element, and the source base station exchanges signaling with the target base station through the control network element to support completion of handover. When the control network element is an MME, an interface between the base station and the MME is an S1 interface. When the control network element is an AMF, an interface between the base station and the AMF is an NG interface. Certainly, the control network element may alternatively be another network side device that completes a function of a control network element in the following procedure. This is not limited in this application. Without loss of generality, the following describes a procedure by using an example in which the control network element is an MME

If the source base station determines that user equipment served by the source base station needs to be handed over, the source base station sends a handover request to the MME. The handover request includes content such as information of a bearer to be handed over and configuration information of the user equipment. The configuration information includes configuration information of the foregoing bearer to be handed over, and may include configuration information of an air interface resource, and the like. The handover request may be handover required (HO required) signaling on an S1 interface between the source base station and the MME

The MME sends, to the target base station through the handover request, content such as the information of the bearer to be handed over, the configuration information of the source base station for the user equipment, and the like. The handover request may be handover request (HO request) signaling on an S1 interface between the target base station and the MME

After receiving the handover request, the target base station returns a handover request acknowledgment to the MME. The handover request acknowledgment may include information of a bearer admitted by the target base station, information of a bearer not admitted by the target base station, configuration information provided by the target base station for the user equipment, and the like. The configuration information may include configuration information provided by the target base station for an admitted bearer, and may include configuration information of an air interface resource, and the like. The handover request acknowledgment may be handover request acknowledge (HO request ACK) signaling.

The MME sends, to the source base station through a handover command, the information of the bearer admitted by the target base station, the information of the bearer not admitted by the target base station, the configuration information provided by the target base station for the user equipment, and the like. The handover command may be handover command (HO command) signaling.

The source base station sends a radio resource control (radio resource control, RRC) connection reconfiguration message to the user equipment based on the received information in the handover command. The message is used to reconfigure the user equipment based on the configuration information provided by the target base station. That is, the configuration information provided by the target base station is sent to the user equipment. The RRC connection reconfiguration message may be RRC connection reconfiguration signaling.

The source base station notifies, through the MME, the target base station of a sequence number (sequence number, SN) and a hyper frame number (hyper frame number, HFN) of a packet data convergence protocol (Packet Data Convergence Protocol, PDCP) used by a bearer between the user equipment and the source base station, so that the target base station implements synchronization with the user equipment. The PDCP SN and HFN information may be sent through SN status transfer signaling.

The user equipment performs synchronization with the target base station based on the received RRC connection reconfiguration message, and accesses the target base station, which includes processes in which the user equipment sends an uplink synchronization signal, and the target base station configures an uplink resource and a timing advance (timing advance, TA) for the user equipment.

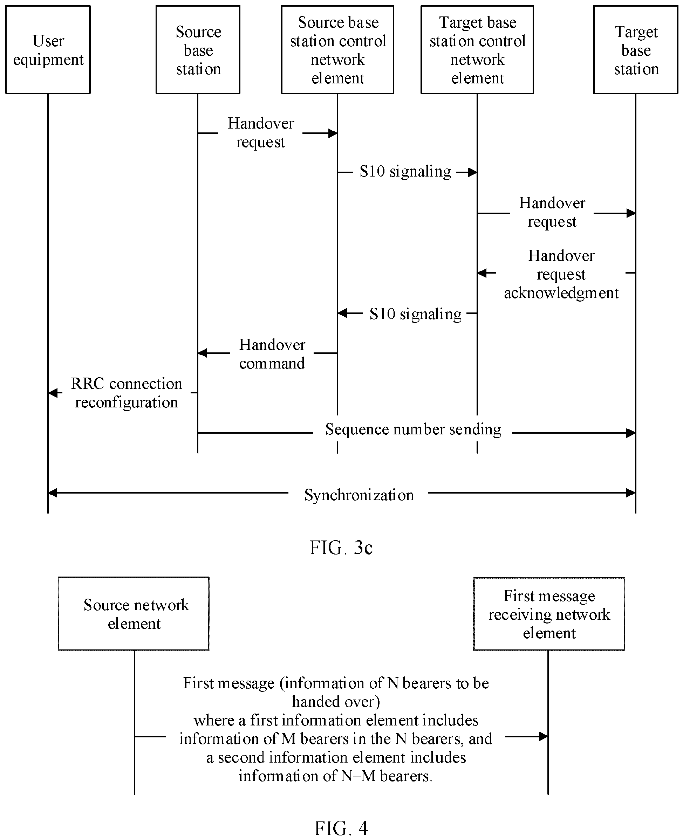

FIG. 3c is a schematic diagram of still another handover procedure according to an embodiment of this application. In this handover process, a source base station and a target base station are connected to different control network elements, and the source base station exchanges signaling with the target base station through the source base station control network element and the target base station control network element, to support completion of handover. For a type of the source base station control network element or the target base station control network element, and an interface between the source base station control network element or the target base station control network element and the base stations, refer to the description of the procedure corresponding to FIG. 3b. When both the source base station control network element and the target base station control network element are MMEs, the source base station control network element and the target base station control network element are referred to as a source MME and a target MME for short respectively. An interface between the source MME and the target MME is an S10 interface.

A difference between the handover procedure corresponding to FIG. 3c and the handover procedure corresponding to FIG. 3b lies in that: the source base station sends handover request (for example, HO required signaling) to the source MME; the source MME sends content such as information of a bearer to be handed over, and configuration information of the source base station for the user equipment to the target MME through S10 signaling; and the target MME sends the foregoing information to the target base station through the handover request (for example, HO request signaling).

The target base station sends the handover request acknowledgment to the target MME. The target MME sends, to the source MME through the S10 signaling, content such as information of a bearer admitted by the target base station, information of a bearer not admitted by the target base station, and the configuration information provided by the target base station for the user equipment in the handover request acknowledgment. Then, the source MME sends the foregoing information to the source base station through a handover command.

For information included in the handover request, the handover request acknowledgment, and the handover command, and a possible signaling form, refer to the description of FIG. 3b. Other procedures in FIG. 3c are consistent with those in FIG. 3b, and details are not described herein again.

The handover procedures shown in FIG. 3a to FIG. 3c are described by using base stations as examples. Without loss of generality, the base stations in the figures may alternatively be network side devices or network elements of another type, for example, another access network device or access network element configured to perform wireless communication with user equipment. A control network element corresponding to an access network device (for example, the base stations in FIG. 3a to FIG. 3c) may be a network side device, for example, a core network device such as an MME or an AMF, that is connected to the access network device and that controls and manages a connection and a service of the access network device.

The handover procedure shown in FIG. 3a or FIG. 3b may be applied to the application scenario shown in FIG. 2a or FIG. 2b, and the handover procedure shown in FIG. 3c may be applied to the application scenario shown in FIG. 2b.

With continuous upgrade of network functions and enrichment of service types, a quantity of bearers provided by a communications network for user equipment needs to be increased, to support the user equipment in transmitting different service data simultaneously. However, network side devices need to be gradually upgraded in order to support the increased quantity of bearers on the whole network. In this upgrade process, some network side devices may support a larger quantity of bearers, while some network side devices may support only a hybrid networking scenario in which there is a smaller quantity of bearers. In this case, the user equipment may need to be handed over between network side devices with different support capabilities. The handover may be performed according to any one of the handover procedures shown in FIG. 3a to FIG. 3c. In a possible scenario, a source base station may have been upgraded or support a relatively new protocol version, so that the source base station can provide a relatively large quantity of bearers for user equipment, while a target base station may have not been upgraded or can support only a relatively old protocol version, so that the target base station can provide a relatively small quantity of bearers for the user equipment. For example, the user equipment is handed over from a 4G base station that supports a relatively new protocol version to a 4G base station that supports only a relatively old version protocol, or the user equipment is handed over from a 5G base station to a 4G base station that supports only a relatively old protocol version. In this case, the target base station cannot support a quantity of bearers provided by the source base station for the user equipment. How to support this type of handover is an urgent problem to be resolved in a network evolution process.

FIG. 4 is a schematic flowchart of a communication method according to an embodiment of this application. The method may be applied to the scenario described in the foregoing paragraph, and is used with reference to any handover procedure shown in FIG. 3a to FIG. 3c. When the method shown in FIG. 4 is applied to any handover procedure shown in FIG. 3a to FIG. 3c, a source network element in FIG. 4 may be a source base station, and a target network element in the method may be a target base station. When the method shown in FIG. 4 is applied to a handover procedure shown in FIG. 3a, a first message receiving network element may be the target base station in FIG. 3a. When the method shown in FIG. 4 is applied to a handover procedure shown in FIG. 3b, a first message receiving network element may be the control network element in FIG. 3b. When the method shown in FIG. 4 is applied to a handover procedure shown in FIG. 3c, a first message receiving network element may be the source base station control network element in FIG. 3c. Certainly, the source network element in FIG. 4 may alternatively be a network side device of another type, for example, an access network device or an access network element. The first message receiving network element may alternatively be a network side device of another type, for example, an access network device, an access network element, a core network device, or a core network element. The target network element may alternatively be a network side device of another type, for example, an access network device or an access network element. An example in which both the source network element and the target network element are base stations, and the first message receiving network element is a target base station, an MME, or a source MM is used below for description.

N is recorded as a quantity of valid bearers that are provided by the source base station for user equipment and need to be handed over. N may be all or a part of all valid bearers currently provided by the source base station for the user equipment. The method shown in FIG. 4 includes: sending, by the source base station, a first message, where the first message includes information of N bearers to be handed over, and N is less than or equal to a maximum quantity of bearers supported by the source network element in the handover. When N is greater than M, a first information element in the first message includes information of M bearers in N bearers, and a second information element in the first message includes information of N-M bearers other than the M bearers in the N bearers, where M is a maximum quantity of bearers supported by the first information element, and the second information element is an information element unidentifiable by the target network element of the handover. With reference to the foregoing scenario, when the source base station can support a relatively new protocol version but the target base station cannot support the relatively new protocol version, signaling directly exchanged between the source base station and the target base station or signaling exchanged through an MME may include an information element supportable (or identified) by the source base station but unsupportable (or unidentified) by the target base station, and an information element supportable (or identified) by both the source base station and the target base station. However, chances are that the source base station does not know a bearer support capability of the target base station. In this case, when the source base station is to notify the target base station of bearers to be handed over, the source base station may divide the bearers to be handed over into two groups. Information of one group of bearers is placed in a first information element, where the first information element may be an information element defined in a relatively old version protocol. Regardless of whether the target base station can support a relatively new protocol version, the target base station can identify the first information element. Information of another group of bearers is placed in a second information element, where the second information element may be an information element defined in a new version protocol. When the target base station cannot support the relatively new protocol version, the target base station cannot identify the second information element, but the target base station can still perform a subsequent handover procedure based on the information of the group of bearers placed in the first information element.

When the quantity N of bearers to be handed over by the source base station is greater than the quantity M of bearers supportable by the first information element,
in a specific example of applying the method shown in FIG. 4 to the procedure shown in FIG. 3a, the first message may be the handover request in FIG. 3a.

The first information element in the handover request may be an E-RABs To Be Setup List information element in an HO request, or an RRC Context information element, or a combination of the E-RABs To Be Setup List information element and the RRC Context information element. The E-RABs To Be Setup List information element is used to provide bearer information such as a bearer identifier and quality of service (quality of service, QoS), and the RRC Context information element includes handover preparation information. The handover preparation information includes air interface information configured by the source base station for the user equipment, for example, DL-DCCH-Message information. Both the E-RABs To Be Setup List information element and the RRC Context information element can support transfer of M pieces of bearer information. According to definitions of the E-RABs To Be Setup List information element and the RRC Context information element in 3rd generation partnership project (third generation partnership project, 3GPP) TS 36.423 (version f00, Release 15), 8 is taken as a value of M. To be specific, the first information element can support information of a maximum of eight bearers.

The second information element in the handover request may be designed based on the E-RABs To Be Setup List information element or the RRC Context information element. For specific content included in the second information element, refer to the definitions of the E-RABs To Be Setup List information element and the RRC Context information element in 3GPP TS 36.423 (version f00, Release 15). A difference lies in that the second information element needs to use a different information element name or information element identifier to distinguish from the first information element. For example, when the second information element and the E-RABs To Be Setup List information element use a same design, a name of the second information element may be defined as E-RABs To Be Setup List Ext. When the second information element and the RRC Context information element use a same design, a name of the second information element may be defined as RRC Context Ext. Information in the RRC Context Ext that has the same function as DL-DCCH-Message may be defined as DL-DCCH-Ext-Message. The second information element may also be designed based on the E-RABs To Be Setup List information element and the RRC Context information element, that is, a combination of the E-RABs To Be Setup List Ext information element and the RRC Context Ext information element. A maximum quantity of bears supported by the second information element may be related to a system requirement. For example, when the maximum quantity of bearers supported by the first information element is 8, and a maximum quantity of bearers defined in the new version protocol is 15, the maximum quantity of bearers supported by the second information element may be defined as 7 (that is, a difference between the maximum quantity of bearers defined in the new version protocol and the maximum quantity of bearers supported by the first information element).

It may be understood that names and specific designs of the first information element and the second information element are merely examples, and there may be other naming and design approaches. This is not limited in this application.

Correspondingly, the target base station receives a first message sent by the source network element, where the first message includes information of N bearers to be handed over, N is less than or equal to a maximum quantity of bearers supported by the source network element, a first information element in the first message includes information of M bearers in the N bearers, and a second information element in the first message includes information of N-M bearers other than the M bearers in the N bearers, where M is a maximum quantity of bearers supported by the first information element, and the second information element is an information element unidentifiable by the target network element of the handover; determines, based on the information of the N bearers in the first information element, a bearer admitted being handed over and a bearer not admitted being handed over; and sends, to the source network element, information of the bearer admitted being handed over and the bearer not admitted being handed over.

Optionally, the information of the bearer admitted being handed over and the information of the bearer not admitted being handed over may be sent through the handover request acknowledgment in FIG. 3a.

For example, the handover request acknowledgment may be HO ACK signaling defined in 3GPP TS 36.423 (version f00, Release 15). An E-RABs Admitted Item information element is used to transfer the information of the bearer admitted being handed over, and an E-RABs Not Admitted List information element is used to transfer the information of the bearer not admitted being handed over.

Optionally, the target base station may further determine to send, through the handover request acknowledgment, configuration information of the bearer admitted being handed over. For example, the handover request acknowledgment may be HO ACK signaling defined in 3GPP TS 36.423 (version f00, Release 15). DL-DCCH-Message information included in the signaling is used to transfer configuration information provided by the target base station for the bearer admitted being handed over.

Optionally, the target base station performs, based on the first message, full configuration on the bearer admitted being handed over; and sends, to the source network element, the configuration information of the bearer admitted being handed over. As the first message includes the second information element unidentifiable by the target base station, the target base station may learn that its bearer support capability is different from that of the source base station. Therefore, the target base station may perform full configuration on the bearer admitted being handed over. A function of the full configuration in this application is to refresh the configuration information provided by the source base station for the user equipment, so that the user equipment receives complete information configured by the target base station, and releases information configured by the source base station for the user equipment, to prevent the user equipment side from carrying an information element unidentifiable by the target base station.

In another specific example of applying the method shown in FIG. 4 to the procedure shown in FIG. 3b or FIG. 3c, the first message may be the handover request sent by the source base station to the MME in FIG. 3b or the handover request sent by the source base station to the source MME in FIG. 3c.

Optionally, the first information element may be an E-RABs Information Item related information element in HO required signaling, or an RRC Container information element, or an E-RABs Information Item related information element and an RRC Container information element. For specific definitions of the E-RABs Information Item related information element and the RRC Container information element, refer to the definitions in 3GPP TS 36.423 (version f00, Release 15).

The second information element may use a design approach the same as that of the E-RABs Information Item related information element, or the RRC Container information element, or the E-RABs Information Item related information element and the RRC Container information element. A difference lies in that the second information element needs to use a different information element name or information element identifier to distinguish from the first information element. For example, when the second information element and the E-RABs Information Item related information element use a same design, a name of the second information element may be defined as E-RABs Information Item Ext. When the second information element and the RRC Container information element use a same design, a name of the second information element may be defined as RRC Container Ext. Information in the RRC Container Ext that has the same function as DL-DCCH-Message may be defined as DL-DCCH-Ext-Message. The second information element may also be designed based on the E-RABs Information Item related information element and the RRC Container information element, that is, a combination of the E-RABs Information Item Ext information element and the RRC Container Ext information element. A maximum quantity of bears supported by the second information element may be related to a system requirement. For example, when the maximum quantity of bearers supported by the first information element is 8, and a maximum quantity of bearers defined in the new version protocol is 15, the maximum quantity of bearers supported by the second information element may be defined as 7 (that is, a difference between the maximum quantity of bearers defined in the new version protocol and the maximum quantity of bearers supported by the first information element).

As the target base station does not support the second information element or can support only a relatively small quantity of bearers (or can support only the maximum quantity of bearers supported by the first information element), the MME in FIG. 3b or the source MME in FIG. 3c or the target MME in FIG. 3c needs to release bearers in the second information element in the process of transferring, to the target base station, information of bearer to be handed over, information element and transfer only information of bearers in the first information element to the target base station. Specifically, in FIG. 3b, the releasing may be performed by the MME. In FIG. 3c, when the target MME does not support the second information element, or can support only a small quantity of bearers (or can support only the maximum quantity of bearers supported by the first information element), the releasing may be performed by the MME. When the target MME can support the second information element, the source MME may not process the second information element, and send both bearer information in the first information element and bearer information in the second information element to the target MME, and the target MME performs the foregoing releasing action. Optionally, the MMEs may exchange respective capability information through S10 interface signaling, to learn bearer support capabilities of each other. A base station and an MME may learn bearer support capabilities of each other through an operations and management (operations and management, OAM) function, signaling exchange, or the like.

To be specific, a first message receiving network element (for example, the control network element in FIG. 3) receives a first message sent by the source network element, where the first message includes information of N bearers to be handed over, N is less than or equal to a maximum quantity of bearers supported by the source network element, a first information element in the first message includes information of M bearers in the N bearers, and a second information element in the first message includes information of N-M bearers other than the M bearers in the N bearers, where M is a maximum quantity of bearers supported by the first information element, and the second information element is an information element unidentifiable by a target network element of the handover; releases the N-M bearers; and sends the information of the N bearers to the target network element of the handover.

With reference to any one of the foregoing specific examples, optionally, a priority of any one of the M bearers is higher than or equal to a priority of any one of the N-M bearers, so that the target network element or the control network element can retain a bearer with a relatively high priority.

Optionally, the source base station may further receive priority information of the N bearers. The priority information may be sent by the control network element of the source base station to the source base station. The priority information in this embodiment of this application may be information that can represent or is used to determine a priority of a bearer, such as a QoS class identifier (QoS class identifier, QCI), an allocation and retention priority (allocation and retention priority, ARP), or a service guarantee bit rate (Service Guarantee Bit Rate, S-GBR). Optionally, the source base station determines a configuration of bearer information in an information element based on at least one piece of the priority information. For example, the source base station sequentially configures bearers in the first information element and the second information element in descending order of QCI information of the bearers.

For example, the source base station learns priority information of a bearer before the bearer is set up. The source base station, for example, may receive E-RAB setup request signaling sent by an MME, where an E-RAB Level QoS Parameters information element in the signaling may be used to indicate the priority information of the bearer.

Optionally, M is a maximum quantity of bearers supported by the target network element of the handover. The maximum quantity of bearer supported by the first information element may be defined as a maximum quantity of bearers supported by the target network element, to better improve compatibility of an entire network.

Optionally, when the quantity N of bearers to be handed over by the source base station is less than or equal to the quantity M of bearers supportable by the first information element, the source base station may configure the information of the N bearers in the first information element. Optionally, when the first message is directly sent by the source base station to the target base station (the procedure shown in FIG. 3a), the second information element is used to trigger the target network element to perform full configuration on at least one of the N bearers. In this case, the second information element may not include any information, or may include information of at least one bearer. The at least one bearer may be any one of the N bearers.

Correspondingly, the target network element receives a first message sent by the source network element, where the first message includes information of N bearers to be handed over, N is less than or equal to a maximum quantity of bearers supported by the source network element, a first information element in the first message includes information of M bearers in the N bearers, and a second information element in the first message includes information of N-M bearers other than the M bearers in the N bearers, where M is a maximum quantity of bearers supported by the first information element, and the second information element is an information element unidentifiable by the target network element of the handover; and determines, based on the information of the N bearers, a bearer admitted being handed over and a bearer not admitted being handed over; and sends, to the source network element, information of the bearer admitted being handed over and the bearer not admitted being handed over. Optionally, the target network element performs, based on the first message, full configuration on the bearer admitted being handed over; and sends, to the source network element, configuration information of the bearer admitted being handed over.

It should be noted that, when a maximum quality of bearers supportable by the source network element is the same as that supported by the target network element, the first information element and the second information element may still be used. Specifically, when both the source network element and the target network element support a relatively new protocol version, or in other words, support a relatively large maximum quantity of bearers, both bearer information configured by the source network element in the first information element and bearer information configured by the source network element in the second information element can be identified by the target network element. The target network element may determine, based on the information of the bearers in the first information element and the second information element, an admitted bearer and a bearer not admitted, and complete the handover according to any one of the procedures in FIG. 3a to FIG. 3c.

An embodiment of this application further provides a bearer remapping method for user equipment.

The user equipment receives a bearer remapping indication, where the bearer remapping indication is used to indicate a terminal device to perform bearer remapping on a traffic flow without a bearer; and maps, based on the bearer remapping indication, the traffic flow without a bearer to a valid bearer.

Specifically, a bearer used by the user equipment may be interrupted or disconnected due to various reasons, and some traffic flows of the user equipment may fail to be transmitted because no bearer is available. Alternatively, in a handover process, after the user equipment is connected to the target base station, because the target base station cannot support all bearers of the source base station or the target base station does not receive all identified bearers, some traffic flows of the user equipment may fail to be transmitted because no bearer is available. In this case, the user equipment may perform the bearer remapping, and map the traffic flow without a bearer to a currently valid bearer for transmission. The bearer remapping indication may be sent by the source base station to the user equipment, or may be sent by the target base station to the user equipment. In a specific example, when the user equipment receives RRCconnectionReconfiguration signaling sent by a network side device, the user equipment may remap a traffic flow based on an air interface configuration of the target network element and an indication (for example, NAS signaling) of the network side device. In this case, a handover procedure may not be completed. For example, initiating a path switch request (for example, path switch request signaling) by a base station to an MME may be performed at the same time with remapping a traffic flow by the user equipment.

Optionally, the user equipment may further receive rule information of bearer remapping; and the mapping the traffic flow without a bearer to a valid bearer includes mapping the traffic flow without a bearer to the valid bearer based on the bearer remapping rule.

The bearer remapping indication and/or the rule information of bearer remapping may be pre-agreed, or may be sent through signaling, for example, air interface signaling or non-access stratum (non-access stratum, NAS) signaling. For example, a core network indicates, through NAS signaling, the user equipment to perform bearer remapping, and the rule for the bearer remapping by the user equipment is predefined in a protocol. A method for bearer remapping may be as follows: The user equipment originally maps traffic flows 1, 2, and 3 (identifiers of the traffic flows are 1, 2, and 3 respectively) to bearers 1, 2, and 3 (identifiers of the bearers are 1, 2, and 3 respectively) in sequence. Because the bearers are reconfigured as bearers 2, 3, and 4, the user equipment may perform the following bearer remapping based on the bearer remapping indication information and/or the rule information of bearer remapping: mapping the traffic flows 2 and 3 to new bearers 2 and 3, and remapping the traffic flow 1 to a new bearer 4.

The foregoing bearer remapping method may be used in combination with the embodiment corresponding to FIG. 4.

For the foregoing scenario in which there are network elements with different bearer support capabilities in one system, an embodiment of this application further provides a bearer re-setup method, to enable the user equipment to be handed over between network elements with different support capabilities.

The source network element may learn a bearer support capability of another network element through signaling exchange between core networks, signaling exchange between base stations, neighboring cell configuration information, or the like, and then determine, in combination with measurement information of the user equipment and the like, whether handover needs to be performed at the moment and a bearer support capability of the target network element. Based on the foregoing information, the source network element may trigger the core networks to re-set up a bearer. A quantity of re-set-up bearers by the core networks may be the same as or less than the bearer support capability of the target network element, so that hitless handover is ensured for a traffic flow.

In a specific example, when the target network element cannot support a quantity of bearers currently provided by the source network element, the source network element may send indication information to a core network, where the indication information is used to indicate the core network to map data on N bearers to M bearers, and N is an integer greater than M. Optionally, N is a quantity of bearers to be handed over by the source network element, and M is a maximum quantity of bearers supported by the target network element. Optionally, the process may be used in combination with the method shown in FIG. 4. For example, the source network element first notifies the core network to re-set-up a bearer. If re-set-up of the bearer cannot be completed, or after the re-setup, the quantity of bearers to be handed over by the source network element is still greater than the maximum quantity of bearers supported by the target network element. In this case, the method provided in FIG. 4 may be further used.

In another specific example, when a quantity of bearers supported by the target network element is greater than a quantity of bearers to be handed over currently, after handover, the target network element may send indication information to a core network, where the indication information is used to indicate the core network to map data on N bearers to M bearers, and N is an integer less than M. Optionally, N is a quantity of bearers that have been handed over and M is a maximum quantity of bearers supported by the target network element or an integer greater than N. By means of the foregoing bearer re-set-up, a traffic flow of the user equipment can be mapped to more bearers, to provide more flexible configuration and management for services. Optionally, the process may be used in combination with the method shown in FIG. 4.

For the foregoing scenario in which there are network elements with different bearer support capabilities in one system, this application provides a communication method. That is, handover is canceled or rejected based on different quantities of bearers supported by the source network element and the target network element (or different capabilities, or a case in which an extended information element cannot be read). The method may be applied to a scenario in which there is a requirement on implementation complexity of user equipment or a network side device, or there is a requirement on power consumption of the user equipment. For example, in scenarios of narrow band internet of things (narrow band Internet of Things, NB-IOT) and machine type communication (machine type communication, MTC), the user equipment cannot support a function of excessively high complexity, and needs to save power as much as possible. Therefore, a complex procedure can be avoided, and the system may not support handover of the NB-IoT or the MTC user terminal between networks that support different quantities of bearers.

In a specific example, with reference to the method shown in FIG. 4, when the target network element, the control network element of the source network element, or the control network element of the target network element identifies that the first message includes an information element not supported by the target network element, the current handover may be rejected. That is, handover request acknowledgment and a subsequent procedure are no longer performed. Instead, a cause (cause) may be carried in handover request reject signaling (for example, HO request reject) fed back by the target base station. The cause is used to indicate that the handover is rejected due to different base station capabilities.

In another specific example, with reference to the method shown in FIG. 4, after receiving the handover request acknowledgment, the source network element may determine, based on a bearer admitted being handed over and a bearer not admitted being handed over that are fed back by the target network element, whether the target network element can identify all bearers to be handed over. For example, when the bearer admitted being handed over and the bearer not admitted being handed over that are fed back by the target network element do not include a bearer to be handed over currently, it may be considered that the target network element does not identify all bearers to be handed over. In this case, the source network element may cancel the handover, to be specific, no longer perform RRC connection reconfiguration and a subsequent procedure, but sends an indication of handover cancellation or handover termination to the target network element, for example, a handover cancel message (for example, handover cancel signaling). The indication may carry a specific cause, for example, a partial handover cause or a DiffBearerNum cause, to indicate that the source network element terminates the handover because quantities of bearers supported by two parties or capabilities of the two parties are different. It can be understood that, bearer handover cancellation cause signaling or bearer handover rejection cause signaling, and naming of specific causes may be adjusted based on a system requirement. The signaling and cause names described above are merely examples.

It should be noted that numbers, such as "first" and "second", of a sequence of signs in this application are merely for clarity of description, and do not constitute a limitation. In different embodiments, messages or information elements with a same number may be a same information element, or may be different information elements.

In the foregoing embodiments provided in this application, the communication method provided in the embodiments of this application is described separately from a perspective of each network element and from a perspective of interaction between network elements. It may be understood that, to implement the foregoing functions, each network element, such as the source network element, the target network element, the control network element, or the user equipment, includes a corresponding hardware structure and/or software module for performing each function. A person skilled in the art should easily be aware that, in combination with units and algorithm steps of the examples described in the embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

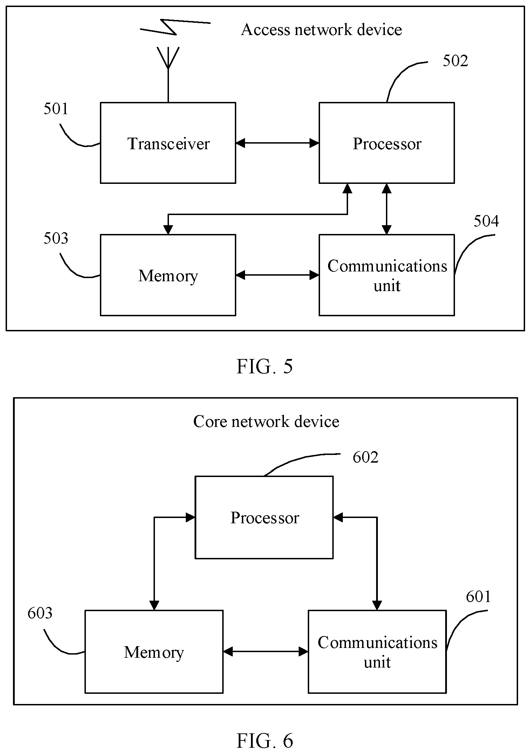

FIG. 5 is a possible schematic structural diagram of an access network device in the foregoing embodiments.

Optionally, the access network device may be the source network element or the target network element in the foregoing embodiments. The source network element or the target network element may be an independent network side device or apparatus, or may be a function entity or apparatus integrated with another network side device, whose specific implementation forms may include a chip system, a discrete device, an integrated circuit, and the like.

In one example, the access network device includes a processor 502 coupled to a memory. The processor 502 is configured to support the access network device in completing the processing process performed by the source network element (for example, a source base station) in the foregoing embodiments. Optionally, the access network device may further include a memory 503. The memory 503 is configured to store program code and data used for the source network element. Optionally, the access network device may include a communications unit 504. The communications unit 504 is configured to support the access network device in completing a function of receiving signaling and/or data of another network side device (for example, a control network element or a target network element) and sending signaling and/or data to another network side device performed by the source network element in the foregoing embodiments. Optionally, the access network device may further include a transceiver 501. The transceiver 501 is configured to support the access network device in completing a function of sending signaling or data to user equipment and receiving signaling and/or data sent by the user equipment performed by the source network element in the foregoing embodiments.

In another example, the access network device includes a processor 502 coupled to a memory. The processor 502 is configured to support the access network device in completing the processing process performed by the target network element (for example, a target base station) in the foregoing embodiments. Optionally, the access network device may further include a memory 503. The memory 503 is configured to store program code and data used for the target network element. Optionally, the access network device may include a communications unit 504. The communications unit 504 is configured to support the access network device in completing a function of receiving signaling and/or data of another network side device (for example, a control network element or a source network element) and sending signaling and/or data to another network side device performed by the target network element in the foregoing embodiments. Optionally, the access network device may further include a transceiver 501. The transceiver 501 is configured to support the access network device in completing a function of sending signaling or data to user equipment and receiving signaling and/or data sent by the user equipment performed by the target network element in the foregoing embodiments.

Specifically, in the example corresponding to FIG. 5, a structure of the access network device in this application includes a transceiver 501, a processor 502, a memory 503, and a communications unit 504.

FIG. 6 is a possible schematic structural diagram of a core network device in the foregoing embodiments.

Optionally, the core network device may be the control network element, the source base station control network element, or the target base station control network element in the foregoing embodiments, for example, the MME or the AMF. The core network device may be an independent network side device or apparatus, or may be a function entity or apparatus integrated with another network side device, whose specific implementation forms may include a chip system, a discrete device, an integrated circuit, and the like.

In one example, the core network device includes a processor 602 coupled to a memory. The processor 602 is configured to support the core network device in completing the processing process performed by the control network element (for example, a source base station) in the foregoing embodiments. Optionally, the core network device may further include a memory 603. The memory 603 is configured to store program code and data used for the control network element. Optionally, the core network device may include a communications unit 601. The communications unit 601 is configured to support the core network device in completing a function of receiving signaling and/or data of another network side device (for example, a source network element or a target network element) and sending signaling and/or data to another network side device performed by the control network element in the foregoing embodiments.

Specifically, in the example corresponding to FIG. 6, a structure of the core network device in this application includes a communications unit 601, a processor 602, and a memory 603.

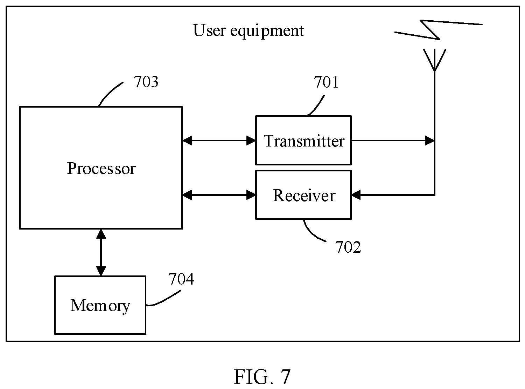

FIG. 7 is a schematic structural diagram of an apparatus for implementing a user equipment function according to an embodiment of this application.

Optionally, the apparatus may be user equipment, or may be a functional module or a function entity in the user equipment, for example, a chip, a chip system, a discrete device, or an integrated circuit in the user equipment.

In one example, the apparatus includes a processor 703 coupled to a memory. The processor 703 is configured to support the apparatus in completing the processing process performed by the user equipment in the foregoing embodiments. Optionally, the apparatus may further include a memory 704. The memory 704 is configured to store program code and data used for the apparatus. Optionally, the apparatus may include a transmitter 701 and a receiver 702, configured to support the apparatus in completing a function of exchanging signaling and/or data with a network side device performed by the user equipment in the foregoing embodiments. Optionally, when the apparatus is a chip or a chip system, a specific implementation form of the transmitter and the receiver may be an input/output interface, for example, may be an input/output interface in a circuit form or a chip pin form.

Specifically, in the example corresponding to FIG. 7, a structure of the apparatus for implementing a function of user equipment in this application includes a transmitter 701, a receiver 702, a processor 703, and a memory 704.

A processor configured to constitute a part of any one of the foregoing devices or apparatuses in this application may be a central processing unit (CPU), a general purpose processor, a digital signal processor (DSP), an application-specific integrated circuit (ASIC), a field programmable gate array (FPGA) or another programmable logical device, a transistor logical device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, a combination of a DSP and a microprocessor, or the like. A memory of any one of the foregoing devices or apparatuses may be further integrated inside the processor.

Methods or algorithm steps described in combination with the content disclosed in this application may be implemented by hardware, or may be implemented by a processor by executing a software instruction. A software instruction may be formed by a corresponding software module. The software module may be stored in a RAM memory, a flash memory, a ROM memory, an EPROM memory, an EEPROM memory, a register, a hard disk, a removable magnetic disk, a CD-ROM, or a storage medium of any other form known in the art. For example, a storage medium is coupled to a processor, so that the processor can read information from the storage medium or write information into the storage medium. Certainly, the storage medium may be a component of the processor. The processor and the storage medium may be located in an ASIC. In addition, the ASIC may be located in any one of the foregoing devices or apparatuses. Certainly, the processor and the storage medium may exist in any one of the foregoing devices or apparatuses as discrete components.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on a computer, all or some of the procedures or functions according to the embodiments of the present invention are generated. The computer may be a general-purpose computer, a special-purpose computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid State Disk, SSD)), or the like.

The objectives, technical solutions, and benefits of this application are further described in detail in the foregoing specific embodiments. It should be understood that the foregoing descriptions are merely specific embodiments of this application, but are not intended to limit the protection scope of this application. Any modification, equivalent replacement or improvement made based on technical solutions of this application shall fall within the protection scope of this application.

## Claims

1. A communication method, comprising:
sending a first message, wherein the first message comprises information of N bearers to be handed over, and
when N is greater than M, a first information element in the first message comprises information of M bearers in the N bearers, and a second information element in the first message comprises information of N-M bearers other than the M bearers in the N bearers, wherein M is a maximum quantity of bearers supported by the first information element, and the second information element is an information element unidentifiable by a target network element of the handover.

2. The method according to claim 1, wherein a priority of any one of the M bearers is higher than or equal to a priority of any one of the N-M bearers.

3. The method according to claim 2, further comprising: receiving priority information of the N bearers.

4. The method according to any one of claims 1 to 3, wherein M is a maximum quantity of bearers supported by the target network element of the handover.

5. The method according to any one of claims 1 to 4, wherein the sending a first message comprises:
sending the first message to the target network element of the handover; or
sending the first message to a control network element.

6. The method according to any one of claims 1 to 5, further comprising:
the first information element comprises the information of the N bearers when N is less than or equal to M.

7. The method according to claim 6, wherein the sending a first message comprises sending the first message to the target network element of the handover, and the second information element is used to trigger the target network element to perform full configuration on at least one of the N bearers.

8. A communication method, comprising:
receiving a first message sent by a source network element, wherein the first message comprises information of N bearers to be handed over, a first information element in the first message comprises information of M bearers in the N bearers, and a second information element in the first message comprises information of N-M bearers other than the M bearers in the N bearers, wherein M is a maximum quantity of bearers supported by the first information element, and the second information element is an information element unidentifiable by a target network element of the handover;
releasing the N-M bearers; and
sending the information of the N bearers to the target network element of the handover.

9. The method according to claim 8, wherein M is a maximum quantity of bearers supported by the target network element.

10. A communication method, comprising:
receiving a first message sent by a source network element, wherein the first message comprises information of N bearers to be handed over, a first information element in the first message comprises information of M bearers in the N bearers, and a second information element in the first message comprises information of N-M bearers other than the M bearers in the N bearers, wherein M is a maximum quantity of bearers supported by the first information element, and the second information element is an information element unidentifiable by a target network element of the handover;
determining, based on the information of the N bearers, a bearer admitted being handed over and a bearer not admitted being handed over; and
sending, to the source network element, information of the bearer admitted being handed over and the bearer not admitted being handed over.

11. The method according to claim 10, further comprising:
performing, based on the first message, full configuration on the bearer admitted being handed over; and
sending, to the source network element, configuration information of the bearer admitted being handed over.

12. A communication method, comprising:
receiving a bearer remapping indication, wherein the bearer remapping indication is used to indicate a terminal device to perform bearer remapping on a traffic flow without a bearer; and
mapping, based on the bearer remapping indication, the traffic flow without a bearer to a valid bearer.

13. The method according to claim 12, further comprising:
receiving rule information of bearer remapping; and
the mapping the traffic flow without a bearer to a valid bearer comprises mapping the traffic flow without a bearer to the valid bearer based on the bearer remapping rule.

14. A communications apparatus, comprising a processor, wherein the processor is configured to couple to a memory to read and execute an instruction in the memory, to implement:
sending a first message, wherein the first message comprises information of N bearers to be handed over, and
when N is greater than M, a first information element in the first message comprises information of M bearers in the N bearers, and a second information element in the first message comprises information of N-M bearers other than the M bearers in the N bearers, wherein M is a maximum quantity of bearers supported by the first information element, and the second information element is an information element unidentifiable by a target network element of the handover.

15. The communications apparatus according to claim 14, wherein a priority of any one of the M bearers is higher than or equal to a priority of any one of the N-M bearers.

16. The communications apparatus according to claim 15, wherein the processor is further configured to execute the instruction, to receive priority information of the N bearers.

17. The communications apparatus according to any one of claims 14 to 16, wherein M is a maximum quantity of bearers supported by the target network element of the handover.

18. The communications apparatus according to any one of claims 14 to 17, wherein the sending a first message comprises:
sending the first message to the target network element of the handover; or
sending the first message to a control network element.

19. The communications apparatus according to any one of claims 14 to 18, wherein the processor is further configured to execute the instruction, so that when N is less than or equal to M, the first information element comprises the information of the N bearers.

20. The communications apparatus according to claim 19, wherein the sending a first message comprises sending the first message to the target network element of the handover, and the second information element is used to trigger the target network element to perform full configuration on at least one of the N bearers.

21. The communications apparatus according to any one of claims 14 to 20, further comprising the memory.

22. A communications apparatus, comprising a processor, wherein the processor is configured to couple to a memory to read and execute an instruction in the memory, to implement the method according to any one of claims 8 to 13.

23. The communications apparatus according to claim 22, further comprising the memory.

24. A computer-readable storage medium, comprising an instruction, wherein when the instruction is run on a computer, the computer is enabled to perform the method according to any one of claims 1 to 13.

25. A communications system, comprising the communications apparatus according to any one of claims 14 to 21 and the communications apparatus according to claim 22 or 23.
